# EUROPEAN PATENT SPECIFICATION

(11) **EP 3 139 700 B1**
(45) Date of publication and mention of the grant of the patent: **04.04.2018**
(21) Application number: 15719015.8
(22) Date of filing: 27.02.2015
(51) Int. Cl.: H05B 1/02, F24D 13/02, H05B 3/26, H05B 3/34

(54) **ACTIVE MANAGEMENT SYSTEM FOR ENERGY IN CONCRETE WALLS AND/OR PAVEMENTS**
AKTIVES VERWALTUNGSSYSTEM FÜR ENERGIE IN BETONWÄNDEN UND/ODER STRASSENBELÄGEN
SYSTÈME DE GESTION ACTIVE D'ÉNERGIE DANS DES MURS ET/OU DES DALLAGES EN BÉTON

(30) Priority: 27.02.2014 PT 10748814
(43) Date of publication of application: 08.03.2017
(73) Proprietor: CMP-Cimentos Maceira e Pataias S.A., 2405-019 Maceira Lra (PT)
(72) Inventor: JESUS DE SEQUEIRA SERRA NUNES. Angela Maria, P-2925-181 Azeitão (PT); AIRES VERMELHUDO, Vitor Manuel, P-2810-071 Almada (PT); SILVESTRE MENDES PINTO DE MOURA, Bruna Gabriela, P-4760-292 Vila Nova De Famalicão (PT); DA SILVA SAMPAIO E PORTELA, Ana Rute, P-4785-588 Trofa (PT); E BRANQUINHO DE PAIS MONTEIRO, Joana Da Fonseca, P-4760-592 Vila Nova de Famalicão (PT); VIEIRA RIBEIRO, Miguel Bruno, P-4745-035 (PT); DA FONSECA, Joana Diniz, P-4425-642 Maia (PT); POÇAS GONÇALVES, José Joaquim, P-4710-432 Braga (PT); NETO GUIMARÃES PEREIRA, João Luís, P-3720-766 Vila de Cucujães (PT); CARVALHO GOMES, João Manuel, P-4700-832 Braga (PT)
(74) Representative: Pereira da Cruz, Joao
(86) International application number: PCT/PT2015/000013
(87) International publication number: WO 2015/130183

(56) References cited:
- WO-A1-97/07652
- WO-A2-2014/024165
- DE-A1- 19 857 493
- GB-A- 2 493 013
- US-B1- 8 070 876

## Description

The present application is a system which allows performing active management of energy in a concrete wall or floor, in its coating, or in a concrete or micro-concrete prefabricated plate, through the control and monitoring of the environment and integrated heating systems, taking advantage of the thermal inertia of the material and of its thermal capacity. This invention also consists in a process to integrate into the concrete both the heating systems and its respective electronics for signal acquisition and transmission.

### State of the art

The concerns with energy efficiency in buildings have been a widely discussed and analyzed subject, having become a worldwide strategy. The European Commission itself has identified this issue in "A lead market initiative for Europe", i.e., as a strategic actuation area characterized by its great capacity for innovation and technological development, continuously presenting new solutions to the market which contribute to an improved energy efficiency and thermal insulation of buildings. Additionally, the strategic agenda within the European Technology Platform for the Construction and Sustainable Habitat also identified the development of structures and materials which contribute to a better thermal management and energy efficiency of buildings as a research priority, contributing to the thermal comfort of users and to a positive impact on energy costs and CO₂ emissions. In parallel, the World Council for Sustainable Development defined a series of actions, such as the deployment and use of new technologies in the area of materials development used in building construction, which stimulate energy efficiency and thermal management in order to promote sustainability. These actions include developments at the level of multilayer and/or coated materials in order to enhance thermal management properties and sensors which enable monitoring and control of these characteristics.

The invention described herein consists in the integration of adjustable and user-controlled heating systems in concrete parts, walls or floors and respective coatings. This system allows a reduction of the energy consumption in the building yet contributing to improve the aesthetic and decorative aspects, since they are completely integrated in the building and have a customized design.

Hereupon, the concrete described in this application is composed by:
1) Heating systems;
2) Control and monitoring systems;
3) Materials for maximizing performance and energy efficiency: phase-change materials (PCMs), reflective materials and concrete with improved thermal insulation properties.

Additionally to these features, and to the fact that all of its components are perfectly integrated in the concrete, this concrete with active management of energy presents a customized design.

In this invention, heating systems are developed using techniques that allow direct printing of circuits with materials having different electrical resistances (or with controlled total resistances of the circuit). This printing is made on flexible/rigid substrates or directly on the concrete surface.

These heating circuits are controlled through monitoring systems composed by firmware, hardware and sensors (temperature and/or humidity). In order that user be able to control the environment temperature and system works in an autonomous and intelligent way, all the concrete parts and heating systems will be connected through a bus or wireless modules which communicate with a central temperature management module for each area to be controlled. This central module communicates with a domotic system or mobile device, allowing the user to set temperature profiles for each environment, define heating schedules, check alerts issued whenever anomalous situations are detected, read temperature and/or humidity parameters in real-time, remotely control the system and monitor consumption. This control by the user can be performed locally or anywhere with internet access.

The fact that the heating, control and monitor system is perfectly integrated in the concrete in a non-visible way is already an innovation.

Currently there are various electrical heating systems in the market (based on Joule effect) for integration into construction/finishing structures and materials, with particular emphasis to the integration in radiant pavement/underfloor heating applications (sandwich material). Typically, these heating systems consist of resistive elements (wire or wire windings as copper and/or aluminum) encapsulated in polymeric or even textile structures (physical coatings), which are subsequently placed under the surface of the floor or wall coating structures [1].

For pavement type applications, these structures are typically assembled through the integration of a wire/wire winding coated with polymeric or textile fabrics (with materials able to support continuous temperature variations between -10°C and 60°C), and then placed on the construction surface, placing the floor panels on its surface. Subsequently, the whole system is connected to the conventional mains power through a DC/AC converter, wherein the temperature controller is integrated in the building structure or placed on a mobile frame suitable for this purpose (typically a wired console). This solution is partially removable (as it involves the removal of the pavement), which is an advantage as it allows an easier access to the heating system in the case of maintenance, but otherwise, as consequence, typically the system presents more failures in operation or an increased wear, as well as higher integration costs and higher material costs [2]. Other commercial solution currently available is the direct integration of the heating elements in the form of cables with polymeric coating, wherein this cable is integrated in the outer coating of the wall or in the pavement, or integrated in the floating floor structures or in the wall coating (applications outside concrete structures). These coated cables will enable heating the structure also through Joule effect (radiant underfloor heating), but typically have a lower energy efficiency than that obtained with heating systems in screen format (flat-sheet) [3].

WO2012/012516 A1 refers to the placement of heating systems under concrete surfaces. In the described inventive process, concrete is sprayed or a layer of mortar is formed over a sheet of microfiber or nanofiber carbon with printed electrodes (metallic or other) which, by applying a voltage, works as heating system. This system differs from the one described herein, since the heating systems, beyond of a distinct type, are placed under the concrete surface and not within the concrete part.

In WO2014024165 A2 a method is disclosed for printing heating devices on flexible substrates and non-flexible substrates, as in concrete. However, in particular for this substrate, the document differs from the present application, in which there is the possibility of allowing an increase in energy efficiency and therefore a better control of the comfort temperature at the concrete surface. The use of a control system - including monitoring relative humidity in the concrete structure, heating circuits, phase-change and encapsulating materials - allows the operation of the heating circuit without additional problems, which problems are not addressed in WO2014024165 A2. Using this type of substrate, rather hygroscopic, is only possible with proper monitoring and autonomous correction of the humidity in the same. This correction is only possible through automatic activation of the heating system after a previously calibrated maximum value of humidity has been detected through the humidity sensor. For this reason, the use of concrete as support substrate for printing heating circuits is limited to a certain range of relative humidity in the structure described in the invention, but this parameter is not mentioned in the referred document.

In other words, the patent application WO 2014024165 has serious drawbacks regarding the correct operation of the reported invention, which are overcome with present invention.

The improvements addressed in this invention and the differences relative to the prior art are guaranteed through a better printing quality of the heating systems on concrete surface. On one hand, the best quality of printing results of the surface treatment through paints and/or varnishes coatings specially formulated for the purpose. On the other hand, this improvement is due to the selection of a concrete whose intrinsic characteristics are adequate to the printing process, such as a roughness lower than 0.5 µm and porosity lower than 10%.

It was found that printing of heating systems directly on concrete substrates is valid only in said ranges of surface roughness, porosity and concrete compactness, showing that said direct printing of the prior art is not valid in any suggested interval but only in those ranges given and referred in this invention.

It is therefore an object of this invention to purpose a range of roughness, porosity, compactness, printed material thickness, printed material width, printed circuit power and encapsulation method of the electronic system, in which the entire system is fully operational and feasible from a technological point of view, since outside of these ranges there isn't any type of viable functionality of the systems directly printed on concrete substrate.

It should be noted that the broad intervals given in the prior art do not include the ranges of roughness, porosity, compactness, printed material thickness, printed material width, printed circuit power and encapsulation method of the electronic system, which would allow to build a valid system specifically for concrete substrates. The definition of the specific intervals in which the electronic heating system directly printed on concrete is valid and functional is identified only in the scope of this invention, these being the appropriate and specific values for concrete substrates having the aforementioned properties.

In case of heating systems printed in concrete operation is only valid when printed tracks have lengths ranging from 50 to 3000mm. For greater lengths there is a voltage drop which prevents the operation of the printed heating systems. Regarding the width of these tracks, operation of heating system is only guaranteed for values between 2.5 and 20mm while its thickness is in the range 10 to 200 µm. This thickness is determined by the roughness and porosity of the concrete surface as well as the material density and should be optimized to guarantee printing uniformity, thus ensuring the system functionality. Thicknesses in the range of 10 to 100 µm are considered for values of surface roughness lower than 0.5 µm and in the range of 100 to 200 µm for values greater than 0.5. Operation of heating systems printed in concrete is only possible for values of porosity lower than 10%. The distance between the bus bars ranges between 40 and 400 mm, which should be defined according to the concrete properties (porosity, compactness, roughness and density of the concrete).

The heating system described in this application was thus designed and characterized for specific implementation in concrete, so that their characteristics and properties are above the prior art when integrated in this specific substrate. In this case, the power of the printed heating circuits is between 50 and 300 w/m².

The monitoring and control system described in this application also has significant advantages over prior art. This system enables concrete to work in an intelligent way, regulating the power supplied to the heating system in order to ensure temperature within comfort zone, and calculating the power required for each type of concrete used and area where it is applied, so as to maximize its energy efficiency. This temperature can also be set by the user, whenever desired, locally or anywhere with internet access, which adds significant value when compared to those already existing in the market. The integration of these components in concrete it is also carried out in order to maximize the durability and functionality of integrated systems for values higher than those in similar products. That is to say, this controlled monitoring and the low power consumption of the heating system allows obtaining energy efficiencies between 5 and 10%, and that surrounding temperature remains close to the comfort temperature without requiring additional systems, i.e. close to 22 °C in winter and 25 °C in summer. Nowadays, the percentage of energy consumption for heating and cooling in a building is about 25%. This value can be reduced by using concrete with the active management of energy described in this application.

There are few concrete products with the functionalities of controllable and adjustable heating systems. The patent WO2012012516A1 describes concrete with improved thermal conductivity comprising carbon fibers and carbon nanotubes for heating, controllable via a thermocouple and control electronics. This invention differs from the one described herein, as the heating system does not have the same versatility of the printed circuits in terms of functionality and temperature variation of the application, and it is not possible to be controlled by the user.

The invention described herein provides even more value in relation to the prior art, as it also includes passive structures which increase thermal insulation and enhance energy efficiency of buildings, in addition to the heating monitoring and control systems. These passive structures consist of phase-change materials (PCMs), reflective materials and concrete with improved thermal properties, all of them as components of the final concrete part, according to a scheme devised to enhance the effect of heating systems and its energy efficiency. These insulating structures are placed at the base of the plate, wall, floor or coating and are formed by insulating concrete or micro-concrete, with cork, presenting fire protection properties and high thermal insulation, in order to direct thermal radiation to the desired interior areas. On the other hand, in the other side of this panel there is one compact layer of concrete with high thermal capacity which will be able to absorb some energy when cooling needs exist, thus helping to reduce the cooling demand, wherein this layer is the one which usually contains the PCMs.

The phase-change materials, known as PCMs, are essentially materials with capacity of absorbing or releasing thermal energy when its physical state is changed. The PCMs absorb and release energy at a constant temperature, storing between 5 and 14 times more heat per unit volume than conventional materials.

For energy storage processes, PCMs with solid-liquid transitions are of greatest interest, because of its small volume changes during the phase-change process.

Such PCMs can be classified according with two main groups: organic and inorganic, in which the organic compounds can still be divided into paraffinic or non-paraffinic (fatty acids). From the combination of two or more organic and/or inorganic compounds results also the eutectic mixtures. Given its chemical variability, the material presenting the phase-change in the desired temperature range can be selected. Additionally, the choice of the PCM should consider the respective thermal, kinetic and chemical properties. The PCM must have a high transition heat per unit volume, in order to store the maximum amount of energy while suffering a reduced variation of volume during the phase change in order to avoid troubles in the encapsulation process. The choice of the PCM should also contemplate climatic and safety aspects and must be non-flammable, non-corrosive, non-toxic and non-explosive.

These materials which enhance the heating effect of heating circuits are incorporated in the cementitious materials to accumulate the heat generated by the heating circuits and release it when the circuits are inactive (off). This incorporation is performed at the level of the concrete surface facing the building interior, in order to maximize the heat release effect in the area where the effect is intended to be experienced.

Regarding its cost and its availability for large scale application, it should be guaranteed that the selected PCM can be supplied in large quantities, and preferably at a low cost in order to be economically competitive with other heat storage solutions. This question is even more relevant if applied to systems designed to ensure energy efficiency and the associated costs reducing.

In terms of encapsulation, the PCMs can be found in the non-encapsulated, macro encapsulated, microencapsulated or stabilized forms. It is essential to protect the PCM at the construction site and prevent it from interacting with the building structure and hence affect the material properties over the years. Thus, encapsulated or stabilized PCMs are in the main focus when considering its incorporation into building materials.

Regarding the incorporation of phase-change materials in cementitious systems, there are already some patents describing various incorporation processes in different materials: US 8070876, US4747240, US2013/0228308 A1, US2011/0108241 A1, EP0830438 B1, among others. Among the various patents, one can refer the WO/2011/071402 A1 which is focused in mortars with incorporation of phase-change materials. The described mortars can be applied on interior and exterior coatings of building systems to achieve energy savings, and are characterized in that comprise PCM microcapsules together with a binder based on lime and other auxiliary materials.

From the conducted research, it appears that the use of phase-change materials in cementitious materials is not new and there are several studies on different forms of incorporation and using different types of PCM. However, there are no studies exploring the incorporation of phase-change materials in complement with heating systems integrated in cementitious materials.

The incorporation of phase-change materials performed under the described conditions will not only allow a thermal energy management due do the typical heat exchange in a wall (between interior and exterior of a building) and reduce temperature variation inside the building, but also act as an accumulator of the heat generated by the heating systems, enhancing its effect and contributing to maximize the overall energy efficiency of the system. This invention offers further developments compared with presented state-of-the-art, as the described incorporation of PCMs enhances the effect of the integrated heating system and ensures an increase of the energy efficiency of the building (increasing energy efficiency in the range of 5 to 10%).

The integration of materials with good properties in terms of thermal insulation in specific areas of the concrete and/or reflective properties, as in the outer region of a wall, adds a significant value since it retains the heat inside the building and directs the heat released by the heating band to its interior.

The cementitious coatings based on cork, EPS, expanded clay and other lightweight aggregates applied on the outer surfaces may increase significantly the contribution of the system, by reducing and redirecting the heat produced by the heating systems to the interior and minimizing losses. The thickness of the concrete wall may itself ensure the same effect when it is greater than 30cm, as the achieved thermal inertia is in this case enough to cover the needs in most of the climatic exposures.

The same is true regarding the integration of reflective metallized structures allowing directing the heat released by the heating systems into the building interior, through the reflection of the radiation in infrared range. Currently, these structures are already widely used for this type of application, but never in a fully integrated manner and according to the functionality described herein.

There is also the fact that this system can be applied to concrete plates exposed on the walls or floors, rather than being embedded inside them, while still presenting a customized design with artistic and architectural finishing, acting as decorative elements with color, design and surface in

DE 198 57 493 A1 discloses a system according to the preamble of claim 1.

### References

[1] Warmlyyours, http://www.warmlyyours.com/en-US/floor-heating/slab-heating
[2] http://www.electricunderfloorheatingsystems.com/product s/underfloor-heating/low-voltage-underfloor-heating.html
[3] Rokuprint, http://www.rokuprint.com/eng/index.htm
[4] Mariana Mendes Goncalves; "Estudo de novos materials de mudança de fase", University of Aveiro, 2009
[5] Nelson Tiago Dias Ferreira da Silva, "Incorporação de Material de Mudança de Fase em Materials de Construção", University of Minho, 2009
[6] Sergio Russo Ermolli, Heli Koukkari, Luis Braganca; "Phase changing materials in building elements", Integrated Approach towards Sustainable Constructions
[7] Prof. Luisa F. Cabeza; "Next Generation cost effective phase change materials for increased energy efficiency in renewable energy systems in buildings", University of Lleida, Spain
[8] Yinping Zhang, Guobing Zhou, Kunping Lin, Qunli Zhang, Hongfa Di; "Application of latent heat thermal energy storage in buildings: State-of-the-art and outlook", Building and Environment, 42, 2197-2209 (2007)
[9] P. Schossig, H.-M. Henning, S. Gschwander, T. Haussmann; "Micro-encapsulated phase-change materials integrated into construction materials", Solar Energy Materials & Solar Cells, 89, 297-306 (2005).

### SUMMARY

The present invention aims to fill gaps regarding thermal insulation and energy efficiency inside buildings, through the functionalization of concrete, micro-concrete or wall and floor coatings used in new building construction or in the rehabilitation of those already existing.

The invention is a system for active management of energy in concrete walls and/or floors, the system comprising: printed heating systems comprising: printed heating circuits integrated in concrete parts during the concrete casting process, or printed heating circuits printed on the surface of concrete parts or cementitious coatings; an electronic system embedded in the concrete, suitable for monitoring and control of the environment and the heating circuits; high reflective materials; phase-change materials; and a concrete wall structure where the heat generated by the printed heating circuits is used.

The present application consists in a concrete with capacity to perform active management of energy, materialized by a concrete/micro-concrete part to be embedded in a wall or floor, or in the respective coating, or in a prefabricated concrete or micro-concrete plate which remains visible and thus presents interesting aesthetic/artistic features forming a decorative element, or yet through integration of the control system directly into the concrete elements during concrete casting. The system of active management of energy aggregates the material characteristics in terms of thermal inertia and heat capacity, as well as the material insulation properties, with an electronic system, control and environment monitoring sensors, triggering the integrated heating systems intelligently in order to reduce the associated energy consumption and ensure the interior thermal comfort. This application also consists in the process of integrating in the concrete both the heating systems and its respective electronics for signal acquisition and transmission.

This concrete with active management of energy can be materialized in a prefabricated plate, to remain visible or for embedding, or can be directly applied on concrete, micro-concrete, and cementitious wall and floor coatings.

This concrete with active management of energy includes:
- high compactness concrete and hence with high thermal inertia and heat capacity at the radiant face, eventually incorporating PCMs;
- heating systems integrated in the concrete part during the concrete casting process;
- monitoring and control systems of the assembly operation, environment and heating circuits in order to maintain the comfort temperature;
- integrated domotic allowing the user to set the comfort temperature and controlling the heating system, either from the interior of the building or from any part of the world with access to the internet;
- insulating concrete formed by materials with good properties in terms of thermal insulation, reflectivity and phase-change to maximize the thermal insulation and energy efficiency.

Moreover the concrete can present a customized design with color, texture and design constituting by itself an artistic finishing or decorative piece.

All systems described above are perfectly integrated into the material, in a non-visible way and well protected.

### DETAILED DESCRIPTION

The present application describes the concrete with active management of energy and includes:
- the integration process of heating systems into the concrete parts or cemented coatings, starting from films with printed circuits which can be embedded during concrete casting or applied by printing these circuits directly on the concrete surface, or in inner layers during the concrete casting;
- a monitoring, managing and controlling system for the heating circuits in order to maintain the comfort temperature of the environment, and respective integration process in the concrete.
- high reflective and phase-change materials, in order to maximize the functionality of the heating systems.
- concrete wall structure to maximize the use of the heat generated by the integrated heating system

### Heating Systems

The developed heating systems are made of materials with different electrical resistances and of electric current conducting materials. The electric current flow through the resistive tracks heats the circuit. The operation of the printed heating circuit is based on the Joule effect, which value depends on the electric resistance of the circuit and on the applied electric voltage.

In a preferred embodiment, the materials forming the bus bar of the heating circuits are of aluminum, typically printed using the screen-printing technique. A thermal cure of the printed pattern at 150°C for 10-15. minutes and a subsequent annealing at a temperature between 780 °C and 840°C for 5-10 minutes, are required after printing these materials.

The materials forming the heating systems are printed using several printing technologies, namely by screen printing, and/or rotogravure, and/or inkjet printing in roll-to-roll and/or sheet to sheet systems. The adopted technology depends on the used substrate, in which flexible or rigid substrates and/or the concrete surface may be considered.

Among the flexible substrates, the polyethylene terephthalate (PET) and/or the polyethylene naphthalate (PEN) are considered, which are compatible with roll-to-roll systems. These substrates are considered for printing due to its low cost, dimensional stability, surface uniformity, resistance to the temperatures required in the thermal cure of printed conductive materials and chemical resistance to the humidity for integration in concrete. This polymeric substrate with the printed heating system undergoes a rolling process and is incorporated into the concrete, more specifically during the concrete casting. The adhesion to the polymeric substrate, if applicable and to mortar or concrete is also considered when selecting the material, so as to ensure that the final product has mechanical and structural properties similar to those of conventional concrete.

Among the selected rigid substrates, the substrates with good thermal insulation properties, such as the silicates, may be considered in order to enhance the heating systems operation regarding the surface of the concrete plate to be heated.

The integration of these heating circuits can also be made directly, via direct printing on the concrete surface or on thin plates of micro-concrete (depending on sizing) which will be later coated once again and incorporated into the final part of the building to be erected or renewed.

In order to guarantee print quality, in-this preferred embodiment the concrete surface is coated with waterproofing inks/formulations, which promote uniformity of the concrete surface and homogeneous absorption of the circuit. This is due to the fact that the concrete surface can present obstacles to the direct printing of the heating systems, namely at microscopic level - roughness and porosity in its surface which affect the good performance of the heating systems.

To ensure a correct printing of the circuit, the concrete surface to be printed must have a very low roughness (<0.05 mm), equivalent to a certain degree of softening or polishing. This finishing can be checked by direct contact with formworks with equivalent degrees of polishing, ensuring in this case a nearly waterproof and very smooth finishing suitable to guarantee a good circuit printing. On the other hand, the used composition, with a cement content not lower than 350 kg/m³ and very low water dosages (<0.4 of the cement weight), guarantees an effective contribution in reducing capillary absorption and thus helps the effectiveness of the film to be printed on the surface.

The sizing of the heating circuits is based on the electrical resistivity of the used materials and on the voltages that are typically applied.

In the particular case of direct printing on the concrete, its operation is only valid when the printed tracks have lengths ranging between 50 and 3000 mm. For longer lengths there is a voltage drop which prevents the operation of the heating systems. Regarding the width of these tracks, the heating system only operates for values between 2.5 and 20 mm, and for values of its thickness between 10 and 200 µm. This thickness is determined by the roughness and porosity of the concrete surface, by the mesh used in the screen printing frame, as well as by the material density, and should be optimized to guarantee the printing uniformity and ensuring the functionality of the system. Thicknesses in the range of 10 to 100 µm are considered for values of surface roughness lower than 0.5 µm and in the range of 100 to 200 µm for values greater than 0.5 µm. The operation of heating systems printed in concrete is only possible for values of porosity around 10%. Another property which determines the value of the thickness is the material density which, preferably, should be lower than 350 kg/m³.

The distance between bus bars ranges between 40 and 400 mm, wherein this value should be sized according to the concrete properties (concrete porosity, compactness, roughness and density).

The printed heating circuit is powered by DC (direct current) or AC (alternating current) electric voltage, which can be adjusted in order to control its temperature or the temperature of the environment in which it is embedded. The type of voltage applied to the circuits depends on the desired final products and on the required power per unit area. The utilization of printed heating circuits is possible in this range of voltages by using an AC-DC transformer suitable to convert alternating current to direct current.

The temperature obtained in the concrete where printed circuits are inserted depends on its size, on the electric voltage applied to its terminals, on the printed tracks dimensions, on its thickness, on the substrate where they are printed, on the materials used for its processing, on the association type (e.g. whether it is in series and/or parallel) between the various printed circuits, on the medium in which the heating circuit is embedded and/or laminated and/or printed, and on the environment temperature.

The power of the printed heating circuit varies with the electric project previously executed, wherein the obtained values range between 50 and 300 w/m².

After its printing, the heating circuits are laminated and/or coated with different materials for electrical and mechanical protection before being integrated into the concrete structure. As protective materials, waterproof and anti-corrosive materials with good mechanical strength should be considered, in order to resist to the concrete casting process of the concrete parts. The encapsulation of heating systems with these materials can be performed with a polymeric material curable by means of UV and/or temperature and through rolling, and/or hot-gluing, and/or slot die, and/or doctor blade, and/or knife-over-edge, and/or screen printing, and/or spray.

Such devices, whose purpose is to produce heating, offer many advantages such as low weight, small thickness and high flexibility, and can be easily laminated with other type of materials. Since these devices are placed close to the concrete surfaces to be heated, there is no power dissipated to the opposite side of the surface near which the heating circuit is placed, resulting in lower energy consumption compared to other conventional heating systems.

### Electronic Control System

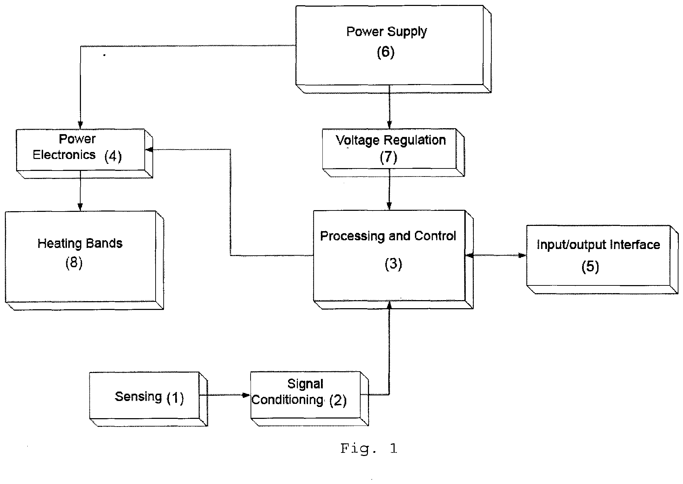

Associated to this heating system there is an electronic control system which regulates the temperature of system as a function of the temperature previously set by the usher, depending on the concrete characteristics and on the power required to reach the comfort temperature, and which monitors the relative humidity inside the room where the concrete with active management of energy is integrated. This system (Fig. 1) comprises the sensing stage (temperature and relative humidity) - (1), signal conditioning stage - (2), processing and control stage - (3), power stage - (4), input/output interface stage (communication) - (5), power supply - (6), voltage regulation stage - (7), and finally a housing for the system integration. The assembly (2) + (3) + (4) + (5) + (7) constitutes the so-called Control Hardware. This system is integrated into the structure, being located between the power supply and the printed heating circuit, thereby regulating the heating power and/or the energy supplied (time of operation).

### (1) Sensing Stage

The sensing stage is responsible for translating the temperature and/or humidity into a measurable electric signal. Either analog or digital type sensors can be used to accomplish this task. The choice of the sensor type is directly related to its positioning in the structure, i.e., considering the fact that the system enables monitoring the temperature in two ways: (Option A) directly on the systems of printed conductors, where the sensor is integrated on that same surface through an automatic assembly process (SMT - Surface Mount Technology assembly) in direct contact with the heating circuit; or (Option B) within the concrete, in which the sensor is placed near the surface as part of a support structure in a rigid or flexible PCB, which is connected to the Hardware Control via an electrical cable (with plug type connector) comprising multiple wires. In this case, the assembly of sensor and connector on the PCB is also made through SMT assembly, but the connection to the hardware is manual by means of the plug connector. In the case of relative humidity monitoring only the option B is valid, since the objective is monitoring the environment humidity in the room where the system is inserted.

Therefore, when option A is considered, the choice of the temperature sensor is preferably based on analog technology due to its simple integration in the heating circuit. Otherwise, when using option B and therefore a supporting structure for the sensor is needed, the digital technology is preferred thus simplifying the signal conditioning stage.

The preferred analog sensor of temperature is of Thin Film RTD (Resistance Temperature Detectors) type from IST (Innovative Sensor Technology), in which sensors with nominal resistance of 100 Ω (PT100), 500 Ω (PT500) or 1000 Ω (PT1000), class A, B or C, can be used depending on the desired sensitivity and accuracy. The preferred package is of SMD (Surface Mount Device) type.

Considering option B, in a version with temperature monitoring only, different sensors can be used, in particular with data interface via I²C (Inter-Integrated Circuit) or 1-Wire, but sensors with package SOT-23 and interface I²C are preferred due to the possibility of choice among a greater number of manufacturers. Still considering the option B, in a version with dual monitoring, i.e. temperature and humidity, the selection involves the use of integrated digital sensors (humidity+temperature). In this case, sensors from different manufacturers can be used, including Honeywell (for instance the model HIH6030-021-001 without integrated protection filter), or IST (for instance the model HYT-221 with integrated protection filter), but preferably sensors from Sensirion should be used, in particular models SHT10, SHT11 or SHT15 depending on the desired accuracy, and respective filters (SF1 model).

### (2) Signal Conditioning Stage

Signal conditioning stage applies when option A is implemented, i.e. temperature monitoring with integrated sensor (analog technology), in the heating circuit. This circuit is responsible for converting the variation in the physical characteristic of the RTD sensor, the variation of resistance in this case, into an amplified electrical signal, filtered and conditioned in terms of amplitude (voltage), in order to be interpreted by next stage (processing and control). This stage can be implemented by means of the traditional method, i.e., based on a set of conditioning levels: bridge in a 3 or 4 wires configuration (preferably), excitation current circuit (stable) suitable to the type of RTD in use (PT100/PT500/PT1000), instrumentation amplifier with reduced offset and respective precision resistances and, at last, an active type filter (preferably of the Sallen-Key type). Despite this traditional conditioning method is effective, in order to increase the system integration it should be preferably used an integrated circuit, called "RTD-to-Digital Converter" from Maxim Integrated, model MAX31865, package 20 TQFN-EP. This device implements all above described levels in one package, with the particularity of having a digital interface via SPI (Serial Peripheral Interface), which also ensures a greater efficiency in sensor interface.

### 3) Processing and Control Stage

The processing and control stage is responsible for the interpretation of data coming from the conditioning circuit (option A), or directly from the sensor (Option B), processing these data (firmware) in order to maintain the temperature according to the user configuration (considered as the comfort temperature), acting on the heating circuit through the power electronics and input/output communication (local server or cloud), whether for sending information to the outside relating the status of heating systems and/or instantaneous value of temperature and/or malfunctions, or for receiving configuration data, updated by the user and sent to the server via App. The device responsible for all of these actions can be of the MCU (microcontroller unit) or SoC (system-on-a-chip) type and can be from different manufacturers. The choice is made depending on the interface desired for the input/output communication and the sensor interface, and considering the fact that an electronic system with a good relation cost × energy consumption × integration is preferred. If the selected interface is of the Zig Bee, Wi-Fi Direct (IEEE 802.15.4) or PLC (Power Line Communication) type, a device with SoC technology from Atmel should be preferably used, according to the interface in question, for instance the model SAM4SP32A (for PLC interface) or the model ATmega2564RFR2 (for Zig Bee interface). If the input/output interface is of the type Wi-Fi (IEEE 802.11), or KNX/EIB (domotic systems), or Bluetooth (2.1 or 4.0), or GPRS (General Packet Radio Service), or EDGE (Enhanced Data rates for GSM Evolution), or HSDPA (High-Speed Downlink Packet Access), or HSDPA+, the choice will be based on a MCU, preferably from Microchip (for instance the model PIC16LF1829), QFN package and respective communication module (for instance the model RN131 with embedded Wi-FI, from the same manufacturer). The choice between options A or B is then almost transverse to this stage, and the changes are essentially at the firmware level. Regarding the information to be sent to the outside, this is encrypted according to a predefined data specification which can be interpreted later by the server/client. In terms of assembling the system components, preferably surface mount components should be selected so as to more effectively allow the implementation of SMT automatic assembly.

### (4) Power Stage

The power stage is responsible for enabling/disabling the printed heating circuit, i.e., actuating in this system under the command of the Control Hardware in order to control the power or the supplied energy (control by operating time). At this stage it is also implemented the protection circuit in order to interrupt the power supply to the circuit, preventing short-circuit situations. Considering the fact that the heating circuit can be powered by means of an AC (alternating current) source when directly connected to the mains, or by means of a DC (direct current) source (DC) needing an AC-DC converter, the power actuator will be specific for each one of these situations. If an AC interface is considered, the actuator may be either of the relay type (3.3 V or 5V coil and 230 V contacts / current depends on the heating circuit to be controlled), or the semiconductor type (for instance TRIAC - Triode for Alternating Current) capable of supporting 230V / adjusted current to the heating circuit, but the semiconductor-based technology is preferred. Alternatively, considering a CC interface, a relay can also be used although it should preferably be used a MOSFET of N or P channel, due to the absence of mechanical parts (which exist in the relay) and due to its smaller size. In terms of electrical characteristics it shall withstand a voltage of 24V / adjusted current to the heating circuit.

Regarding the protection circuit and considering the high powers involved, the preferred protection is based on the use of appropriate switches (for instance from Schneider Electric), including AC (230 V) or DC (24V), wherein the cutting current is appropriate to the characteristics of the heating circuit under consideration.

### (5) Stage of input/output Interface (Communication)

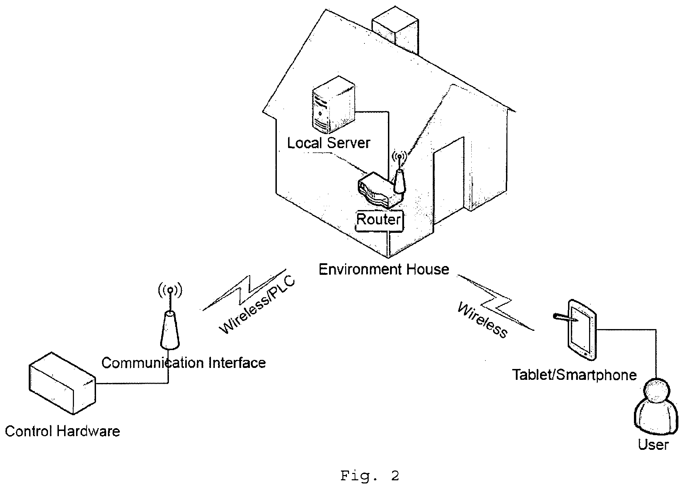

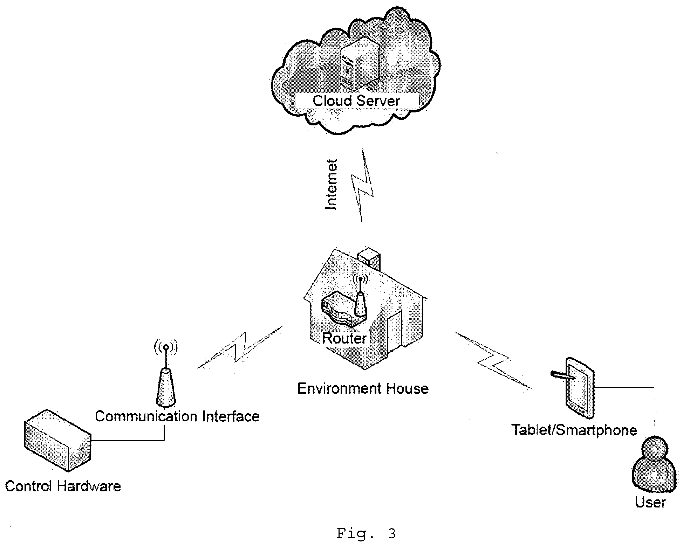

The stage of input/output interface is responsible for the "bridge" between Control Hardware and outside world, in particular for the user-system interaction. In the situation where the processing and control stage is based on the SoC technology, this stage is embedded in that SoC implementing communication with the outside via the built-in communication module. In the situation in which technology based on MCU is used, the communication is therefore performed through an independent emitting-receiving unit selected according to the desired communication interface. The interface between MCU and communication unit may be based on SPI, USB (Universal Serial Bus) or asynchronous series protocol for reasons of efficiency and compatibility, and preferably the SPI or asynchronous series should be used. This stage will then send the information to local server (Fig. 2) (when no internet connection exists) or directly to the cloud (when there is an internet connection), see Fig. 3.

In cloud-based architecture, Control Hardware sends information to a remote server located in the cloud, via a router (located in the house) with internet access. The server is aimed to access data from the hardware, to store them and subsequently submit the information to the user. This architecture allows the user to access data through any terminal, for instance smartphone, tablet, laptop or desktop, regardless of its location and provided that an internet access exists.

The goal of the architecture based on a local system is to allow users without internet access and/or do not wish to store the information from the Control Hardware in the cloud, with the ability to still control the system through any terminal - for instance smartphone, tablet, laptop or desktop - once connected to the local area network (house). In this architecture the Control Hardware will then send the information to a local server where this data are stored and locally accessed, i.e. on the same network.

### 6) Power supply

The power supply is responsible for supplying energy for both the heating circuit (through power electronics action) and control circuit - Control Hardware (through the voltage regulator). The power supply is only used when it is intended to power the heating circuit with a 12V/24V voltage with a current adapted to the needs of this circuit. When choosing to connect this circuit directly to the mains, there is no need to use a power supply. This source is either of linear or switch mode type. The switch mode power supply is the preferred type for use in this system, since it has a smaller volume (for the same output) and also allows increasing energy efficiency in comparison with a linear power supply. In terms of manufacturers (for instance TRACO Power), the range of choice is very diverse and so, regardless of the manufacturer, a source applicable on DIN rail should be used in order to facilitate the power supply installation on the system switchboard.

### (7) Voltage Regulation

The voltage regulating stage is responsible for keeping the output voltage constant and stabilized, even when there are voltage variations in the mains, or more current is requested from the power supply. This stage is directly related to the Control Hardware, which needs to be powered with a regulated voltage between 2.5 V - 3.3V due to its characteristics. Given also the fact that the energy supply comes directly from the mains - AC, or through the power supply (12 V or 24V) - CC, depending on the selected energy supplying method for the heating circuit, this stage should still perform: an AC-DC conversion (for instance using converters from TRACO Power or XP Power), wherein converters from TRACO Power should be used considering the connection to the mains; a DC-DC conversion based on linear or switch mode type voltage regulator, wherein switch mode type from XP Power should be preferably used, aiming to increase the energy efficiency of the system.

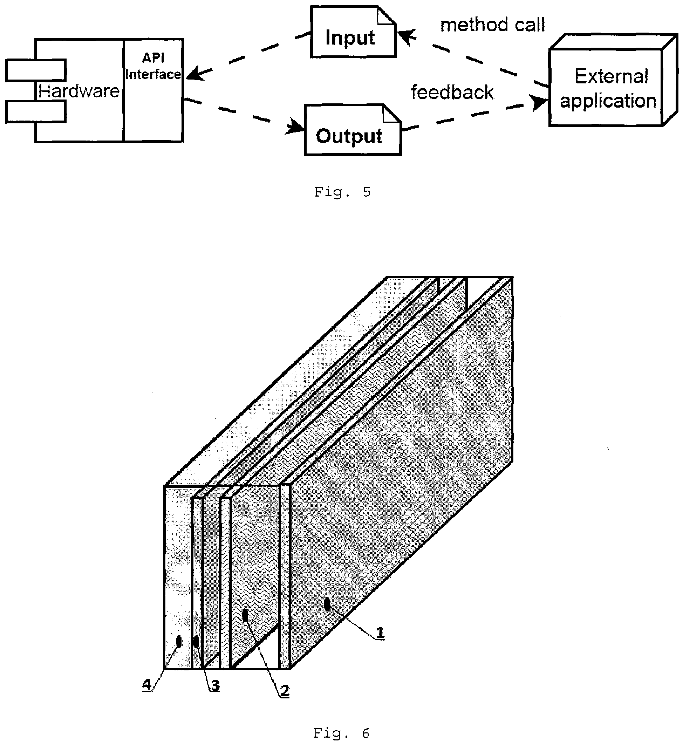

In terms of operation logic (Fig. 5), the Control Hardware behaves as follows: once connected to the mains, the device performs the boot, i.e., is connected to the server (local or cloud) in order to download all the configurations required for its operation as defined by the configurator and/or user. Once the boot process is completed based on the configurations defined by the system configurator, the device verifies each 15 sec (example - configurable parameter) the temperature and/or humidity and, based on temperature limits defined by the user, the device drives the actuator to turn on or off, whether the monitored value is below or above the limit values, respectively. Additionally to this procedure, the monitored data (temperature and/or humidity) is sent to the server (local or cloud) for further analysis by the user. The rate at which the data is sent to the server is defined by the user, and there is still the possibility of performing the instant monitoring on-demand.

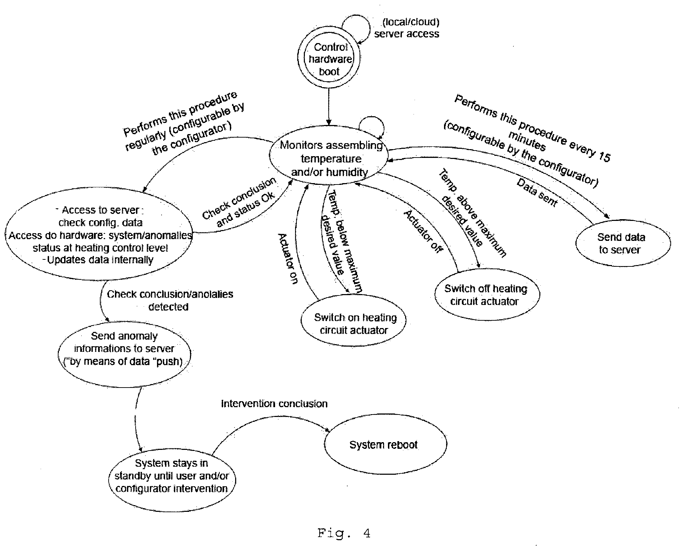

Together with the procedures shown, the following is still performed: procedure for verification of configuration data (for internal update of the control levels), verification of the heating system status, and verification of anomalies at the level of heating control; if temperature is not changing as expected, a warning is sent indicating an anomaly at the level of heating circuit performance; in a further example, if there is a short circuit in the heating circuit, an alert is sent indicating an anomaly in the power supply circuit. The anomalies are sent directly to the server immediately after its detection (by means of data push) and, in case of a short-circuit or anomaly in the power supply of heating circuit, the system remains in standby until a technical intervention is performed followed by a reboot of the system (Fig.4).

The system, namely the Control Hardware, has an API (Application Programming Interface) through which services are provided to enable the interaction with this hardware, thus allowing the development of control software by an external entity intending to interact with the system. By providing a set of methods, it is possible to access specific features of the hardware, thus enhancing the development of customized applications according to the requirements of each user. The document describes the various services required for the development of applications able to interact with the system. The document describes the methods and the input and output data flow, as well as the protocol specification for communication with the Hardware.

The API has the following nomenclature:
Service type
[output] method_name (input);

The documentation describes the objective of the method, the type of method to which it belongs - i.e. whether it is a configuration, reading or status service - the type of data return (output) and the data entry (input). Through using the API documentation any programmer is able to consult and understand the services-and develop an application which can interact with the Control Hardware.

The logic architecture of the API is shown in Fig. 5.

### Systems integration in concrete

The integration of the heating and active management systems can be accomplished in several ways, namely:
- In the case of direct application on a concrete part (wall/floor); usually the concrete casting is phased into outer and inner wall concrete casting. When preparing the concrete casting of the inner wall, the heating systems are introduced into the formwork, suitably positioned in concrete with the help of spacers and fixed to reinforcements by means of spring systems or similar, in order to ensure its stability and positioning during concrete casting. The objective is to place these heating systems as close as possible to the surface, usually at a distance lower than 2cm. The concrete should be introduced carefully and gradually, to avoid damage to the circuits and accessory pieces. Its location in the concrete part should be planned in order to place the connection boxes and cables assembly at strategic points previously defined in the project. The part is then casted with finishing concrete of high thermal capacity, to stay at sight or for later coating, with or without addition of PCMs depending on the project. The outer surface is usually casted with concrete and should incorporate the thermal insulation, when specified, or made with concrete with thermal insulating properties as mentioned above.
- In the case of plate prefabrication, concrete casting is phased in layers; in a first layer is placed the concrete with the higher thermal capacity and the heating systems are introduced under this layer followed by the insulating/reflective concrete. These parts may offer a finishing in the face at sight with architectural effects. Negatives will be provided in these parts in order to ensure the placement of accessories.
- At last, these plates may be final constructive elements of floor and walls, or may be itself embedment elements working as system encapsulation, thus ensuring greater robustness, ease of application and system efficiency, as these plate elements can be distributed along the walls and floors, assembled together and covered with floor and wall finishing layers, thus remaining embedded or at sight whichever is desired, minimizing errors in its placement and in concrete casting in situ.

### Materials to maximize performance

To fulfill the functionality of storage of heat generated by the heating systems integrated in concrete, organic - paraffin - and inorganic - hydrated salts - PCMs with solid-liquid transitions in the desired temperature range have been used for the invention described in this application. The temperature range was defined in view of the functionality of storage of heat generated by the integrated heating system, in order to enhance/extend its effect. The setting of the temperature range is related to the desired temperatures in the environment. According to the described above regarding the electronic system of control associated to the heating systems, the voltage applied to the heating circuit is interrupted when reaching the maximum temperature set to maintain the comfort temperature in the environment. The voltage is restored when the temperature reaches the minimum set point. Thus, the phase change of the embedded PCM must occur between the maximum and minimum set points. Preferably, the transition temperature should be close to the lower limit, in order to maximize the accumulation time of the generated heat. Without PCMs the time during which the voltage applied to the heating circuit is interrupted corresponds to the time necessary for concrete surface reach the minimum temperature set point, and depends greatly on the thermal inertia associated with the concrete. With the incorporation of PCMs, the time during which the applied voltage is interrupted will increase, since the phase-change materials will gradually release the heat previously stored, thus keeping for a longer time the temperature of the cementitious material surface within the range which has been set. In this way, it is possible to increase the cooling time of the concrete surface, i.e. the time necessary to reach the minimum temperature, and hence the time during which the voltage applied to the circuit is interrupted, which corresponds to a substantial reduction in consumption and a significant improvement in the system (about 1 to 2%). The incorporation of PCMs in the above described conditions will thus not only enhance the heating effect of the integrated heating systems, as it increases the time during which the temperature of the concrete surface is within the desired range, but also significantly contribute to the energy efficiency of the system due to an increased period during which the voltage application is inactive.

For the described system and based on the exposition above, the incorporated PCM should have a transition temperature between 25°C and 40 °C, and preferably between 29°C and 34 °C.

The organic PCMs may be some organic chemicals such as capric acid and C19 paraffin, and some organic eutectic mixtures as the mixture of 62.6% lauric acid and 37.4% myristic acid, and the mixture of 64 % lauric acid and 36% palmitic acid. Commercially available organic PCMs with phase transition temperatures within the desired range can also be used for the described system, including the Micronal PCMs from BASF, the RT-type paraffinic products from Rubitherm, the A-type organic PCMs from Phase Change Material Products, the PCMs from Microtek, among others.

Regarding the inorganic PCMs, there are several examples of suitable hydrated salts such as hexa-hydrate calcium bromide, ten-hydrate sodium sulfate, ten-hydrate sodium carbonate, hexa-hydrate calcium chloride, tri-hydrate lithium nitrate, among others.

Additionally, eutectic mixtures can be used with this type of compounds: 60% tri-hydrate sodium acetate + 40% urea, 67% tetra-hydrate calcium nitrate + 33% hexa-hydrate magnesium nitrate, among others. Similarly to organic PCMs, there are some commercial solutions which also include inorganic PCMs. Rubitherm and Phase Change Material Products are examples of manufacturers which offer hydrated salts suitable for the intended application in their range of products.

Regarding the techniques for incorporating PCMs in the cementitious material featured in the invention of this application, the following may be considered: direct incorporation of microencapsulated PCMs; application of polymeric films containing microencapsulated PCMs; application of macroencapsulated PCMs in a plastic plate; and incorporation of granules of stabilized PCM. Preferably, incorporation should be performed through direct incorporation of microencapsulated PCMs or granules of stabilized PCM, as they allow a more easy application at the work site.

Still referring to PCM application in the cementitious material, it is essential that incorporation is done at the level of the inner surface of concrete (Fig. 6), in order to maximize the heat release effect by the PCM in the region where that effect is intended to be experienced.

The described invention further includes materials known by its infrared reflectivity, allowing to reflect the heat emitted by the heating system to the surface of the concrete plate to be heated.

As reflective substrates, all materials existing on the market (polymeric films, textile structures) with such properties may be considered, or others - rigid or flexible substrates - which are considered suitable for easy incorporation in concrete. In this invention these materials are metallized using known technologies for this type of function. In one approach, metallization is performed in a vacuum chamber, using a roll-to-roll system allowing the deposition of a thin aluminum layer on the substrate surface. The emissivity of these materials is determined and defined as low as possible to maximize the desired effect. The materials here applied have an emissivity in the range of 0.1 to 0.3.

These materials are located in the concrete, as close as possible to the plate surface which is not intended to heat and away from the printed heating system (Fig. 6), so as to minimize heat conduction. The distance to the surface should be between 5 mm and 1 cm, from the heating system and from the face of the plate which is not intended to heat, in order to minimize heat conduction to the outside and maximize its reflectivity.

It is also part of this invention the utilization of mortar/concrete with good thermal insulation properties on the concrete surface which is furthest from the wall and/or floor surface (Fig. 6), namely concrete, micro-concrete or mortar incorporating lightweight aggregates such as cork, EPS, expanded glass, expanded clay or the like, which on one hand ensure maximum isolation at the inner/outer border and, on the other hand, maximize the efficiency of heating systems reducing heat losses and maximizing irradiation towards the interior.

This integration of phase-change, reflective and thermal insulation materials increases the value of the product described herein, as it promotes its energy efficiency and maximizes its functionality in a passive way, i.e. without an active energy consumption. This maximization of the concrete functionality with active management of energy described in present application enables a reduction of the energy consumption associated with building heating systems between 5% and 10%.

The issues related to the aesthetics of walls/floors of the building where this concrete is integrated are also considered in the product described herein. In the manufacture process of these concretes it is possible to achieve an artistic and architectural finishing, as well as coloring and several textures resulting in a decorative and pleasant aspect, thus facilitating their integration without damages in existing structures and adding aesthetic value. The integration of these indistinguishable elements in new constructions and rehabilitations can also be made by embedding, enabling to avoid the conventional heating systems, maximizing the available space and making the spaces more appropriate to the so fashionable minimalist arcliitectures/decorations.

When using prefabricated concrete plates with active management of energy to embed in walls and floors, the dimensions can vary according to the desired heating power and to the required sizing for self-supporting. These dimensions are defined in order to facilitate their integration in the work site using any non-specific resource, thus promoting its immediate application.

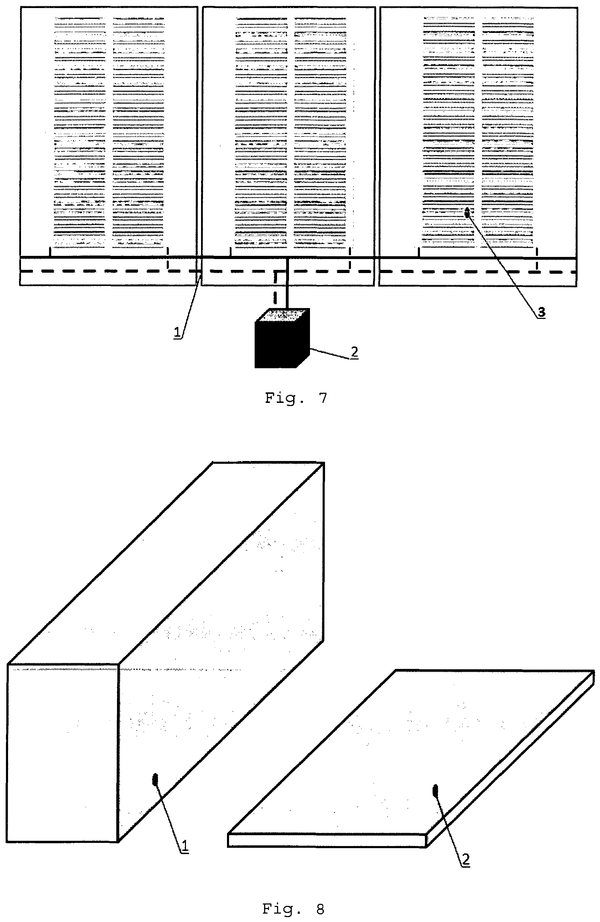

These concrete parts/units are provided with connectors in its ends for connection of the parts together, which allows that only one of these parts is connected to the power supply (Fig. 7), thus facilitating the integration of complex systems composed of a large number of heating zones, both from the ease of integration and aesthetic points of view. The connections between the parts/units include the connection for the power supply of heating systems and for the communication of temperature and/or humidity sensors with the central unit of communication integrated in one of the parts. Depending on the application, the connectors to be used comply with the following requirements: tightness, ability to conduct high electrical currents, good electrostatic insulation, easy fitting to facilitate the placement of the integrated sensors and heating.

### Examples

### Example 1 - Calculation of the time for the heating ramp in the concrete

In this example a system is considered with the following characteristics:
- heating ramp from 15°C to 32 °C;
- power of the heating systems = 150 W/m²;
- concrete with 1 cm thickness between the heating system and the surface of the concrete part.

Depending on the characteristics of the heating circuits and thermal properties of the concrete, it was determined that the time required for the initial heating ramp (from 15°C to 32°C) is, in this case, about 40 minutes.

### Example 2 - Calculation of the heat released by the heating systems during its active period

In this example a system is considered with the following characteristics:
- temperature range (in which the voltage is applied to the heating circuit) from 32°C to 40°C;
- power of the heating systems = 150 W/m²;
- the heating time from 32°C to 40°C at the surface of the concrete plate is 19 minutes. This value was defined according to the characteristics of the heating systems and thermal properties of concrete.

With this data, it is possible to calculate the radiant energy per square meter released by the heating circuits during the time considered. The value obtained was 171 kJ/m².

### Example 3 - Incorporation of a commercial microencapsulated PCM

In this example, a commercial microencapsulated PCM was used with melting temperature around 32 °C and a thermal storage capacity of 130kJ/kg.

The amount of incorporated PCM is calculated in order to be able to absorb 50% of the heat generated by the heating system. Thus, for a plate with an area of 1 m², the PCM must absorb 85.5 kJ of thermal energy during said period of time, i.e., the time during which the heating systems are releasing heat.

Following this calculation, and knowing the energy storage capacity of the described PCM, it is possible to determine the amount of PCM required to absorb 50% of the heat generated and released by the heating systems. It was found that about 650 g/m² of PCM should be incorporated in the cementitious mixture.

Since the PCM must be placed in the surface layer of the concrete plate, it is assumed that the PCM is incorporated into a 1cm thick concrete layer. Considering an average density of 2300 kg/m³. for a conventional concrete, about 23 kg of concrete is required for a concrete plate with dimensions 0,01×1×1m.

Thus, the percentage of PCM incorporated into this concrete layer was 2.8%.

### Example 4 - Efficiency of concrete parts with integrated heating systems

In this example the heating system was integrated in a concrete part which was evaluated through a simulation of use with the help of a temperature monitoring system.

The concrete part was placed inside a climatic chamber so as to evaluate its efficiency when simulating its use. The outside temperature was controlled and fixed at 5 °C.

Several temperature sensors were placed along the entire climatic chamber in order to monitor the temperature distribution and one of which was placed on the surface of the concrete part. About 20 minutes after the system activation, the temperature on the concrete surface stabilized at 25°C while inside the climatic chamber stabilized at 1.5 °C.

### Brief Description of the Figures

For an easier understanding of the product, Figures illustrating all the concrete components with active management of energy described in this application are attached.

In addition to the already referred in the "Description" section of this patent application, the following information regarding the Figures is added.

Figure 1 shows the block diagram representing the control and monitoring electronic system for the heating systems, consisting of 8 stages:
1 - Sensing
2 - Signal conditioning
3 - Processing and control
4 - Power electronics
5 - Input/output interface
6 - Power supply
7 - Voltage regulation
8 - Heating systems

All these stages are described in detail in this application.

Figure 2 illustrates the local server architecture, which is described in the stage of input/output communication in this patent application.

Figure 3 shows the cloud server architecture, which is described in the stage of input/output communication in this patent application.

Figure 4 shows the diagram of the operation logic (firmware) for the control and monitoring electronic system.

In Figure 5 the logical architecture of the API (Application Programming Interface) is schematized.

Figure 6 illustrates a preferred embodiment for the concrete part with active management of energy comprising:
1 - concrete with PCMs;
2 - heating system, which may include the heating systems shown in Figure 1, printed on flexible and/or rigid substrates. Coupled to this heating system is the electronics for monitoring and controlling the operation of heating systems and respective temperature and humidity sensors;
3 - materials with reflective properties to infrared (IR) ;
4 - concrete with improved thermal insulation properties.

Figure 7 shows how the connection of the various concrete plates with active management of energy will be performed for the construction of a wall or floor:
1 - Connection plate-to-plate which can be performed by means of connectors;
2 - Power supply;
3 - Heating band.

Figure 8 illustrates the application of the concrete with active management of energy described in this invention:
1 - wall;
2 - floors;
3 - prefabricated parts to be embedded or stay at sight.

## Claims

1. System for active management of energy in concrete walls and/or floors, the system comprising:
printed heating systems comprising:
printed heating circuits integrated in concrete parts during the concrete casting process, or
printed heating circuits printed on the surface of concrete parts or cementitious coatings;
the system further comprising high reflective materials; **characterized in that** the system comprises:
- an electronic system embedded in the concrete, suitable for monitoring and control of the environment and the heating circuits;
- phase-change materials; and
- a concrete wall structure suitable for the usage of the heat generated by the printed heating circuits.

2. System for active management of energy according to claim 1, **characterized in that** the printed heating circuits are made of metallic and/or nonmetallic materials and/or composites, used as current conductors and resistive systems, wherein the values of electrical power of such printed heating circuits are comprised between 50 and 300 W/m².

3. System for active management of energy according to claim 1, **characterized in that** the materials which form the printed heating circuits are printed by means of screen printing, and/or rotogravure, and/or inkjet printing through roll-to-roll and/or sheet-to-sheet systems, on flexible substrates, rigid substrates or the concrete surface.

4. System for active management of energy according to the preceding claims, **characterized in that** the printed heating circuits printed in concrete have printed tracks with lengths ranging between 50 and 3000 mm, values of width between 2.5 and 20 mm, and values of thickness between 10 and 200 µm.

5. System for active management of energy according to the preceding claims, **characterized in that** the printed heating circuits printed in concrete are printed directly on the surface of the concrete part, wherein the concrete surface is previously coated with waterproofing paints/formulations or the like, so that the surface roughness of the concrete part should not exceed 0.5mm and the porosity in blank should be lower than 10%.

6. System for active management of energy according to claim 5, **characterized in that** the printed heating circuits are laminated and/or coated with different materials after printing.

7. System for active management of energy according to claim 1, **characterized in that** it incorporates thermal insulating materials in the concrete.

8. System for active management of energy according to claim 7, **characterized in that** the thermal insulating materials are cementitious coatings based on cork and other lightweight aggregates, and are applied on exterior surfaces.

9. System for active management of energy according to claim 1, **characterized in that** the concrete presents high compactness with porosity lower than 10%, and hence high thermal inertia and radiant thermal capacity, wherein this concrete topology should be located on the surface facing the interior of the building.

10. System for active management of energy according to claim 1, **characterized in that** the electronic system is formed by:
- sensing module, comprising temperature and relative humidity sensors (1);
- signal conditioning module (2);
- processing and control module (3);
- power module (4);
- input/output interface module suitable for communication (5);
- power supply (6);
- voltage regulation module (7); and
- a housing for system integration;
wherein the signal conditioning module (2), the processing and control module (3), the power module (4), the input/output interface module (5) and the voltage regulation module (7) form the Control Hardware, the Control Hardware being integrated inside the structure and being positioned between the power supply and the printed heating circuits, thereby being suitable for regulating the heating power and/or supplied energy.

11. System for active management of energy according to claim 1, **characterized in that** the phase-change materials are incorporated into cementitious materials to store the heat generated by the printed heating circuits and to release it when the circuits are inactive; the incorporation is performed at the level of the concrete surface facing the interior of the building and the phase-change materials have a transition temperature between the maximum and minimum set points for the concrete surface temperature, defined between 25°C and 40°C.

12. System for active management of energy according to claim 1, **characterized in that** the high reflective materials are rigid or flexible substrates, such as, among others, polymeric films and textile structures which are metallized using techniques as for example vacuum metallization in roll-to-roll systems or the like, which are integrated in the concrete during the concrete casting process and are arranged at a distance between 5mm and 1cm to the printed heating circuits, these materials having a thermal emissivity comprised between 0.1 and 0.3.

## Patentansprüche

1. System für aktives Management von Energie in Betonwänden und/oder Betonböden, das System umfasst:
- Bedrukte Heizsysteme, die folgendes umfassen:
• Bedrukte Heizkreise, die während dem Betongießverfahren in den Betonteilen integriert werden, oder
• Bedrukte Heizkreise, die auf die Oberfläche von Betonteilen oder zementösen Beschichtungen gedruckt werden; das System umfasst auch Materialien mit hoher Reflektivität;
**dadurch gekennzeichnet, dass** das System folgendes umfasst:
- ein, in dem Beton eingebettetes, elektronisches System, geeignet für die Überwachung und Steuerung der Umwelt und der Heizkreise;
- Phasenwechselmaterialien; und
- eine Betonwandstruktur, geeignet für die Nutzung der Wärme, die von den bedrukten Heizkreise erzeugt wird.

2. System für aktives Management von Energie nach Anspruch 1, **dadurch gekennzeichnet, dass** die bedrukten Heizkreise aus metallischen und/oder nichtmetallischen Materialien und/oder Verbundstoffen gemacht sind, als Stromleiter und widerstandsfähige Systeme genutzt werden, worin sich die Werte der elektrischen Leistung dieser bedrukten Heizkreise zwischen 50 und 300W/m² befinden.

3. System für aktives Management von Energie nach Anspruch 1, **dadurch gekennzeichnet, dass** die Materialien, die die bedrukten Heizkreise bilden, durch Siebdruck, und/oder Rotationstiefdruck, und/oder Tintenstrahldruck durch Rolle zu Rolle und/oder Blatt zu Blatt Systeme, auf flexible Substrate, feste Substrate oder der Betonoberflächen gedruckt werden.

4. System für aktives Management von Energie nach den vorherigen Ansprüchen, **dadurch gekennzeichnet, dass** die bedrukten Heizkreise, die in Beton gedruckt werden, gedruckte Streifen, mit Längen zwischen 50 und 3000mm, Werte für Weite zwischen 2,5 und 20mm, und Werte für Dicke zwischen 10 und 200 µm haben.

5. System für aktives Management von Energie nach den vorherigen Ansprüchen, **dadurch gekennzeichnet, dass** die bedrukten Heizkreise, die in Beton gedruckt werden, direkt auf die Oberfläche der Betonteilen gedruckt werden, worin die Betonoberfläche, zuvor mit Abdichtungsfarben oder Formeln o. dgl. beschichtet wird, sodass die Oberflächenrauheit des Betonteils nicht mehr als 0,5mm überschreitet und die Porosität blanko unter 10% liegt.

6. System für aktives Management von Energie nach Anspruch 5, **dadurch gekennzeichnet, dass** die bedrukten Heizkreise, nach dem Drucken, laminiert und/oder mit verschiedenen Materialien beschichtet sind.

7. System für aktives Management von Energie nach Anspruch 1, **dadurch gekennzeichnet, dass** Wärmedämmstoffe in dem Beton eingebaut sind.

8. System für aktives Management von Energie nach Anspruch 7, **dadurch gekennzeichnet, dass** die Wärmedämmstoffe zementöse Beschichtungen, die aus Kork und anderen leichtgewichtigen Aggregaten gemacht sind, und auf äußeren Oberflächen angewandt werden.

9. System für aktives Management von Energie nach Anspruch 1, **dadurch gekennzeichnet, dass** das Beton hohe Kompaktheit mit Porosität unter 10%, und daher hohe Wärmeträgheit und strahlende Wärmekapazität aufweist, worin diese Betontopologie, an der Oberfläche dem Inneren des Baus zugewandt, platziert werden soll.

10. System für aktives Management von Energie nach Anspruch 1, **dadurch gekennzeichnet, dass** das elektrische System aus folgendem gebildet wird:
- Sensormodul, das Temperatur- und Relativfeuchtigkeitssensoren(1) hat;
- Signalkonditionierungs-Modul (2);
- Verarbeitungs- und Steuermodul (3);
- Leistungsmodul (4);
- Input/Output Interface-Modul, geeignet für Kommunikation (5);
- Stromversorung (6);
- Spannungsregelung-Modul (7); und
- ein Gehäuse für Systemintegration;
worin das Signalkonditionierungs-Modul (2), das Verarbeitungs- und Steuermodul (3), das Leistungsmodul (4), das Input/Output Interface-Modul (5) und das Spannungsregelungs-Modul (7) die Steuerungshardware formen, die Steuerungshardware ist im Inneren der Struktur integriert und befindet sich zwischen der Stromversorgung und den bedrukten Heizkreisen, dadurch ist sie für die Regulierung der Heizkraft und/oder der gelieferten Energie geeignet.

11. System für aktives Management von Energie nach Anspruch 1, **dadurch gekennzeichnet, dass** die Phasenwechselmaterialien in zementösen Materialien eingebaut sind, um die Wärme, die von den bedrukten Heizkreisen erzeugt wird, zu speichern und diese freizugeben, wenn die Kreise inaktiv sind; der Einbau wird auf der Ebene der Betonoberfläche, dem Inneren des Baus zugewandt, und wenn die Phasenwechselmaterialien eine Übergangstemperatur zwischen den maximalen und den minimalen Grenzwerten für die Betonoberflächentemperatur, die zwischen 25°C und 40°C bestimmt wird, durchgeführt.

12. System für aktives Management von Energie nach Anspruch 1, **dadurch gekennzeichnet, dass** die hochreflektierenden Materialien feste oder flexible Substrate sind, wie, unter anderen, polymere Filme und textile Strukturen, die metallisiert werden, indem Techniken wie zum Beispiel Vakuum-Metallisierung in Rolle zu Rolle Systemen o. dgl. verwendet werden, die während dem Betongießverfahren in das Beton integriert werden und mit einer Distanz von zwischen 5mm und 1cm zu den bedruckten Heizkreisen angeordnet sind, diese Materialien haben einen thermischen Emissionswert, der zwischen 0,1 und 0,3 liegt.

## Revendications

1. Système de gestion active d'énergie dans des murs et/ou des sols en béton, le système comprenant :
des systèmes de chauffage imprimés comprenant :
des circuits de chauffage imprimés intégrés dans des pièces de béton pendant l'opération de bétonnage, ou
des circuits de chauffage imprimés sur la surface de pièces en béton ou de revêtements cimentaires ;
le système comprenant en outre des matériaux à haute réflectivité ;
**caractérisé en ce que** le système comprend :
- un système électronique intégré dans le béton, adapté à la surveillance et au contrôle de l'espace environnant et des circuits de chauffage ;
- des matériaux à changement de phase ; et
- une structure de mur en béton adaptée pour l'utilisation de la chaleur produite par les circuits de chauffage imprimés.

2. Système de gestion active d'énergie selon la revendication 1, **caractérisé en ce que** les circuits de chauffage imprimés sont constitués de matériaux métalliques et/ou non métalliques et/ou composites, utilisés comme des conducteurs de courant et des systèmes résistifs, où les valeurs de puissance électrique desdits circuits de chauffage imprimés sont comprises entre 50 et 300 W/m².

3. Système de gestion active d'énergie selon la revendication 1, **caractérisé en ce que** les matériaux qui constituent les circuits de chauffage imprimés sont imprimés par sérigraphie et/ou rotogravure et/ou impression à jet d'encre dans des systèmes rouleau à rouleau et/ou feuille à feuille, sur des substrats flexibles, des substrats rigides ou la surface de béton.

4. Système de gestion active d'énergie selon les revendications précédentes, **caractérisé en ce que** les circuits de chauffage imprimés dans le béton ont des pistes imprimées ayant des longueurs comprises entre 50 et 3000 mm, des largeurs entre 2,5 et 20 mm et des épaisseurs entre 10 et 200 µm.

5. Système de gestion active d'énergie selon les revendications précédentes, **caractérisé en ce que** les circuits de chauffage imprimés dans le béton sont imprimés directement sur la surface de la pièce en béton, où la surface de béton est préalablement revêtue de peinture/formulations imperméabilisantes ou similaires, de façon à ce que la rugosité superficielle de la pièce en béton ne dépasse pas 0,5 mm et la porosité dans le vide soit inférieure à 10%.

6. Système de gestion active d'énergie selon la revendication 5, **caractérisé en ce que** les circuits de chauffage imprimés sont laminés et/ou revêtus de différents matériaux après l'impression.

7. Système de gestion active d'énergie selon la revendication 1, **caractérisé en ce qu'**il incorpore des matériaux isolants thermiques dans le béton.

8. Système de gestion active d'énergie selon la revendication 7, **caractérisé en ce que** les matériaux isolants thermiques sont des revêtements cimentaires à base de liège et d'autres agrégats légers et sont appliqués sur des surfaces extérieures.

9. Système de gestion active d'énergie selon la revendication 1, **caractérisé en ce que** le béton présente une compacité élevée avec une porosité inférieure à 10% et donc une inertie thermique et une capacité thermique radiante élevées, où cette topologie de béton doit être située sur la surface tournée vers l'intérieur du bâtiment.

10. Système de gestion active d'énergie selon la revendication 1, **caractérisé en ce que** le système électronique est constitué de :
- un module de détection, comportant des capteurs de température et d'humidité relative (1) ;
- un module de conditionnement de signal (2) ;
- un module de traitement et de contrôle (3) ;
- un module de puissance (4) ;
- un module d'interface d'entrée/de sortie adapté à la communication (5) ;
- une source d'alimentation (6) ;
- un module de régulation de tension (7) ; et
- un boîtier pour l'intégration du système ;
dans lequel le module de conditionnement de signal (2), le module de traitement et de contrôle (3), module de puissance (4), le module d'interface d'entrée/de sortie (5) et le module de régulation de tension (7) constituent le matériel de commande, le matériel de commande étant intégré à l'intérieur de la structure et positionné entre la source d'alimentation et les circuits de chauffage imprimés, étant donc approprié pour réguler la puissance de chauffage et/ou l'énergie fournie.

11. Système de gestion active d'énergie selon la revendication 1, **caractérisé en ce que** les matériaux à changement de phase sont incorporés dans des matériaux cimentaires pour emmagasiner la chaleur produite par les circuits de chauffage imprimés et la libérer lorsque les circuits sont inactifs ; l'incorporation est réalisée au niveau de la surface de béton tournée vers l'intérieur du bâtiment et les matériaux à changement de phase ont une température de transition entre les valeurs maximum et minimum prévues pour la température de la surface de béton, définie entre 25°C et 40°C.

12. Système de gestion active d'énergie selon la revendication 1, **caractérisé en ce que** les matériaux à haute réflectivité sont des substrats rigides ou flexibles, tels que, entre autres, des films polymères et structures textiles qui sont métallisés au moyen de techniques comme la métallisation sous vide dans des systèmes rouleau à rouleau ou similaires, qui sont intégrés dans le béton pendant l'opération de bétonnage et sont disposés à une distance entre 5 mm à 1 cm par rapport aux circuits de chauffage imprimés, ces matériaux ayant une émissivité thermique comprise entre 0,1 et 0,3.
